# EUROPEAN PATENT SPECIFICATION

(11) **EP 4 148 959 B1**
(45) Date of publication and mention of the grant of the patent: **29.04.2026**
(21) Application number: 21196483.8
(22) Date of filing: 14.09.2021
(51) Int. Cl.: H02K 5/136, H02K 5/22, H02K 5/15, H02K 5/173

(54) **ROTATING ELECTRICAL MACHINE**
ROTIERENDE ELEKTRISCHE MASCHINE
MACHINE ÉLECTRIQUE TOURNANTE

(43) Date of publication of application: 15.03.2023
(73) Proprietor: TMEIC Corporation, Tokyo 104-0031 (JP)
(72) Inventor: MISOKA, Ryo, Tokyo, 104-0031 (JP)
(74) Representative: TBK

(56) References cited:
- CN-A- 102 255 454
- CN-A- 106 505 778
- CN-A- 106 549 525
- CN-A- 109 687 623
- CN-A- 112 242 773
- GB-A- 517 781
- US-A1- 2010 176 673
- US-B1- 6 172 436
- US-B2- 8 317 201

## Description

### FIELD

Embodiments described herein relate generally to a rotating electrical machine.

### BACKGROUND

Rotating electrical machines typically include a stator, a rotor, and a housing that houses the stator and the rotor. The housing includes a plurality of mutually joined members. Among rotating electrical machines, a flameproof motor is a kind of explosion protection motor or hazardous area motor, and it is designed so as to prevent sparks (ignition) from reaching the outside of the housing through a gap in case of an internal explosion.

If internally exploded, the housing with a large volume may cause pressure piling. Such an explosion accompanied by pressure piling may increase the force of sparks to fly through the gap between the members. CN 106 549 525 A discloses a rotating electrical machine having the features of the preamble of claim 1. US 2010/176673 A1, CN 106 505 778 A, CN 109 687 623 A, CN 102 255 454 A and CN 112 242 773 A disclose further related prior art.

### SUMMARY

A first aspect of the invention is defined in claim 1. A second aspect of the invention is defined in claim 2.

### BRIEF DESCRIPTION OF THE DRAWINGS

FIG. 1 is a cross-sectional view schematically illustrating an electric motor according to one embodiment;
FIG. 2 is a cross-sectional view illustrating a frame and a bracket in the embodiment, not representing the invention;
FIG. 3 is a cross-sectional view illustrating the bracket and an oil thrower in the embodiment; and
FIG. 4 is a cross-sectional view illustrating the frame and a terminal board in the embodiment.

### DETAILED DESCRIPTION

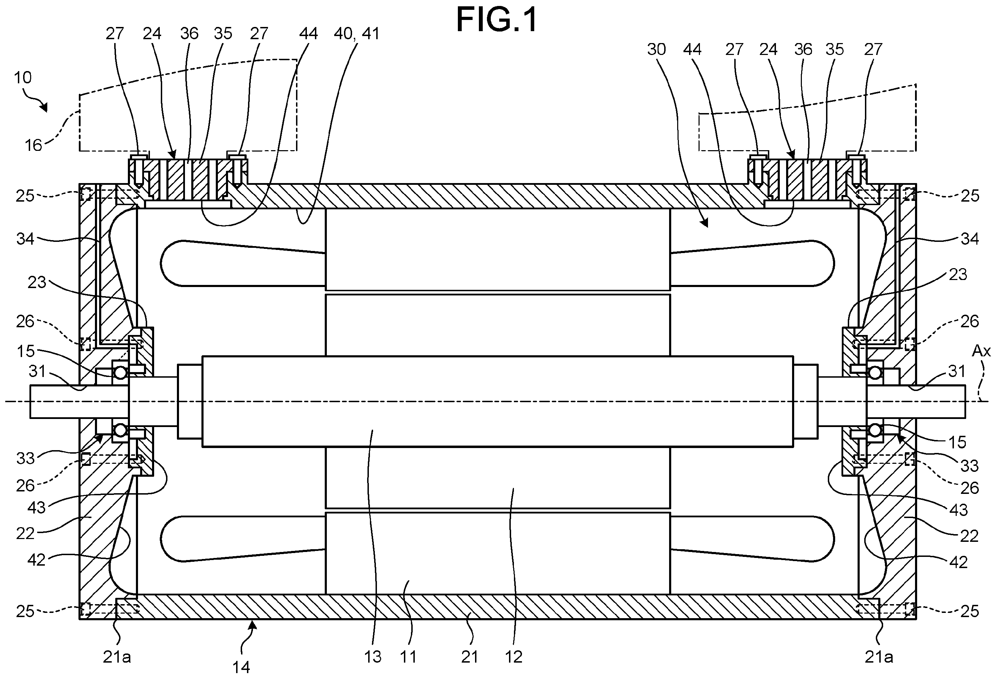

One embodiment will be explained below referring to FIGS. 1 to 4. Note in this specification, that constituents and explanations therefor relevant to the embodiment may occasionally be expressed in multiple ways. The constituents and the explanations therefor are merely illustrative ones, and are not limited by the expression in this specification. The constituents can be specified also by names different from those used in this specification. Moreover, the constituents can be explained by using expressions different from those used in this specification.

FIG. 1 is a cross-sectional view schematically illustrating an electric motor 10 according to this embodiment. The electric motor 10 is an exemplary rotating electrical machine. The electric motor 10 may be an explosion proof motor, for example. The rotating electrical machine may be another rotating electrical machine, such as an electrical generator. The electric motor 10 includes, as illustrated in FIG. 1, a stator 11, a rotor 12, a shaft 13, a housing 14, two bearings 15, and a terminal box 16.

The stator 11, the rotor 12, and a part of the shaft 13 are housed inside the housing 14. The rotor 12 is driven by current that flows in a winding of the stator 11, and rotates around an axis of rotation Ax. The shaft 13 is attached to the rotor 12 and rotates together with the rotor 12. The axis of rotation Ax corresponds to the center-line of the shaft 13. FIG. 1 illustrates a cross section of the electric motor 10, taken in parallel to the axis of rotation Ax of the shaft 13 and including the axis of rotation Ax.

In the explanation below, a direction along the axis of rotation Ax of the shaft 13 will be defined as an axial direction for convenience. In addition, the direction orthogonal to the axis of rotation Ax will be defined as radial direction, and the direction around the axis of rotation Ax will be defined as circumferential direction.

The stator 11 has a substantially cylindrical shape extending in the axial direction. The stator 11 is fixed to the housing 14. The stator 11 includes, for example, a stator iron core made of a magnetic material and a winding attached to the stator iron core.

The rotor 12 has a substantially cylindrical shape extending in the axial direction, and is substantially concentric to the stator 11. The rotor 12 is placed inside the stator 11 with a gap in-between. The rotor 12 includes a plurality of permanent magnets.

The structures of the stator 11 and the rotor 12 are not limited to the examples as above, as long as they can generate torque by an electromagnetic force. For example, the rotor 12 may include a rotor iron core made of a magnetic material, and a conductor attached to the rotor iron core.

The shaft 13 has a substantially cylindrical shape extending in the axial direction. A part of the shaft 13 resides inside the housing 14. The other part of the shaft 13 resides outside the housing 14. Outside the housing 14, the shaft 13 is, for example, connected to an external device. The external device is driven as the shaft 13 rotates.

The housing 14 has a box shape made of a metal. Note that the housing 14 may be made of another material.

The housing 14 includes a frame 21, two brackets 22, two oil throwers 23, two terminal boards 24, a plurality of first bolts 25, a plurality of second bolts 26, and a plurality of third bolts 27. The oil throwers 23 form a part of the walls. Each of the first bolts 25, the second bolts 26, and the third bolts 27 represents an exemplary bolt.

The housing 14 has a room 30 inside. The room 30 is a substantially cylindrical space extending in the axial direction. The room 30 is surrounded by the frame 21 and the two brackets 22. The room 30 may have another shape. The stator 11, the rotor 12, and a part of the shaft 13 are housed in the room 30.

The frame 21 has a substantially cylindrical shape extending in the axial direction. The frame 21 may have another shape. The room 30 is located inside the frame 21 and surrounded by the frame 21. The frame 21 surrounds the stator 11 and the rotor 12. The frame 21 is substantially concentric with respect to the stator 11 and the rotor 12. The frame 21 is fixed to the stator 11.

The bracket 22 has a plate shape intersecting the axial direction. The two brackets 22 are joined to both axial ends 21a of the frame 21 with the plurality of first bolts 25. Thereby, the brackets 22 close the ends 21a of the frame 21. In the axial direction the stator 11 and the rotor 12 are located between the two brackets 22.

Each of the two brackets 22 is provided with an insertion hole 31. The insertion holes 31 pass through the brackets 22 in the axial direction. The insertion holes 31 allow the room 30 to communicate with the outside of the housing 14 therethrough. Note that the insertion holes 31 may not allow the communication between the room 30 and the outside of the housing 14 by themselves. For example, the insertion holes 31 may be in the middle of a channel that solely allows the communication between the room 30 and the outside of the housing 14. The shaft 13 passes through the insertion holes 31. In other words, the shaft 13 passes through the brackets 22 in the axial direction.

The oil throwers 23 have a plate shape intersecting the axial direction. The two oil throwers 23 are located more inside the housing 14 than the brackets 22. The two oil throwers 23 are joined to the corresponding brackets 22 with the plurality of second bolts 26.

Each of the two oil throwers 23 is provided with an insertion hole 32. The insertion holes 32 pass through the oil throwers 23 in the axial direction. The insertion holes 32 are substantially concentric with respect to the insertion holes 31 of the brackets 22. The shaft 13 passes through the insertion holes 32. In other words, the shaft 13 passes through the oil throwers 23 in the axial direction.

Each bearing chamber 33 is located between the bracket 22 and the oil thrower 23 joined to the bracket 22. The bearing chamber 33 communicates with the insertion hole 31 of the bracket 22 and with the insertion hole 32 of the oil thrower 23.

Each bearing 15 resides in the bearing chamber 33. The bearing 15 is, for example, attached to the bracket 22 in the bearing chamber 33. The bearing 15 rotatably supports the shaft 13 around the axis of rotation Ax.

Each of the two brackets 22 is provided with an oil passage 34. The oil passage 34 allows the bearing chamber 33 to communicate with the outside of the housing 14. The bearing chamber 33 can be supplied with lubricant through the oil passage 34.

Each of the two terminal boards 24 includes a cover 35 and a plurality of terminals 36. The cover 35 has a plate shape, and is joined to the frame 21 with the plurality of third bolts 27. The terminals 36 serve as a conductor passing through the cover 35. The terminals 36 are electrically connected to the stator 11 through, for example, wiring. The terminals 36 may be electrically connected to another component, such as a sensor installed in the room 30.

The terminal box 16 is located outside the housing 14. The terminal box 16 is electrically connected to the terminals 36 of the terminal boards 24. Hence, the terminal box 16 is electrically connected to the stator 11 through the terminals 36.

The frame 21, the brackets 22, the oil throwers 23, and the terminal boards 24 are mutually joined by spigot joint. The spigot joint is also referred to inlaying or "inro" joint in Japanese. According to the spigot joint, two members are joined together by fitting a protrusion or a stop on one member into a depression or a hole in the other member. Note that the frame 21, the brackets 22, the oil throwers 23, and the terminal boards 24 may be mutually joined by any other method.

The housing 14 further has an inner face 40. The inner face 40 faces inside of the housing 14. The inner face 40 forms, defines, or demarcates the room 30. In other words, the inner face 40 is a surface of the housing 14, exposed to the room 30.

The frame 21, the brackets 22, the oil throwers 23, and the terminal boards 24 all include a part of the inner face 40. Hence, the inner face 40 has a partial inner face 41 included in the frame 21, a partial inner face 42 included in the brackets 22, a partial inner face 43 included in the oil throwers 23, and a partial inner face 44 included in the terminal boards 24. The partial inner faces 41 to 44 constitute the inner face 40 and forms, defines, or demarcates a part of the room 30.

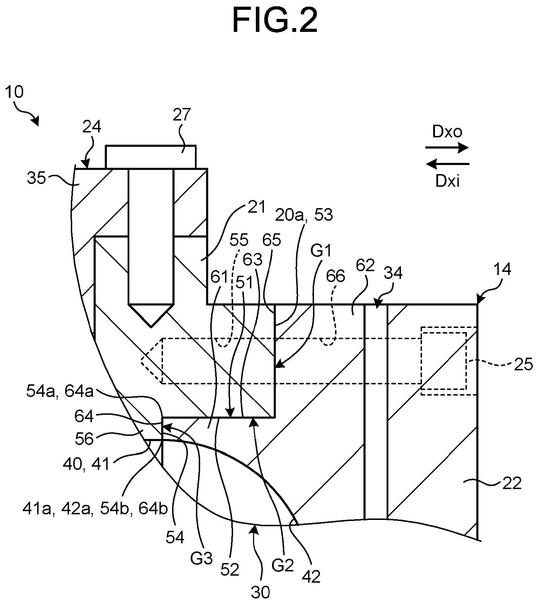

FIG. 2 is a cross-sectional view illustrating the frame 21 and the bracket 22 of this embodiment. In the example illustrated in FIG. 2, the frame 21 represents an example of the first member, and the bracket 22 represents an example of the second member.

The frame 21 is provided at both ends 21a with two fitting holes 51. The two fitting holes 51 allow the room 30 to communicate with the outside of the housing 14 therethrough. The fitting holes 51 represent an example of the first hole.

In this embodiment, the fitting holes 51 form a part of the inner space of the frame 21. It can be said, however, that the fitting holes 51 pass through the ends 21a of the frame 21 in the axial direction. The axial direction represents an example of the first direction. The inner space of the frame 21 includes the room 30 and the fitting holes 51.

The frame 21 has an inner circumferential face 52, a joint face 53, and a stepped face 54. The joint face 53 represents an example of the first joint face. The stepped face 54 represents an example of the first face.

The inner circumferential face 52 is a substantially cylindrical curved face extending in the axial direction. The inner circumferential face 52 forms, defines, or demarcates at least a part of the fitting holes 51. The inner circumferential face 52 faces inwards in the radial direction. In other words, the inner circumferential face 52 faces inside of the fitting holes 51.

The joint face 53 is, for example, located at the axial end 21a of the frame 21. Note that the joint face 53 may be located at another position. The joint face 53 is connected to the end of the inner circumferential face 52 in an outward axial direction Dxo. The outward axial direction Dxo refers to a direction towards the outside of the housing 14 in the axial direction, and is included in the axial direction. The outward axial direction Dxo represents an example of the first direction.

The joint face 53 is, for example, a substantially annular flat face extending in the outward radial direction from the end of the inner circumferential face 52. The joint face 53 faces in the outward axial direction Dxo. The outward axial direction Dxo orthogonally intersects a direction the inner circumferential face 52 faces. The outward axial direction Dxo represents an example of the direction orthogonal to the direction the inner circumferential face faces. Note that the joint face 53 may face in another direction intersecting the direction the inner circumferential face 52 faces.

The joint face 53 is provided with a bolt hole 55. In other words, the frame 21 is provided with the bolt hole 55 opening to the joint face 53. The bolt hole 55 represents an example of the second hole. The bolt hole 55 extends in the axial direction from the joint face 53. The bolt hole 55 has a female screw threaded inside. The female screw of the bolt hole 55 can be screwed with a male screw threaded on the first bolt 25.

The stepped face 54 is spaced away from the joint face 53 in an inward axial direction Dxi, for example. The inward axial direction Dxi refers to a direction towards the inside of the housing 14 in the axial direction, and is included in the axial direction. The inward axial direction Dxi is opposite to the outward axial direction Dxo, and represents an example of the second direction.

A radially outside end 54a of the stepped face 54 is connected to an end of the inner circumferential face 52 in the inward axial direction Dxi. The end 54a represents an example of the first end. A radially inside end 54b of the stepped face 54 is connected to an edge 41a of the partial inner face 41 of the frame 21. The end 54b is opposite to the end 54a. The end 54b represents an example of the second end. The edge 41a represents an example of the first edge.

The stepped face 54 is, for example, a substantially annular flat face extending in the inward radial direction from the end of the inner circumferential face 52. The stepped face 54 faces in the outward axial direction Dxo. Hence, the stepped face 54 intersects the axial direction. Note that the stepped face 54 may face in another direction that intersects the direction the inner circumferential face 52 faces. The stepped face 54 may face in a different direction from the joint face 53.

The radial length of the stepped face 54 is shorter than the axial length of the inner circumferential face 52. In other words, the distance between the end 54a and the end 54b of the stepped face 54 is shorter than the distance between the joint face 53 and the stepped face 54.

The frame 21 further includes a step 56. The step 56 represents an example of the first protrusion. It can be said that the step 56 protrudes inwards from the inner circumferential face 52 in the radial direction. The step 56 is away from the end 21a of the frame 21 in the inward axial direction Dxi. The stepped face 54 is included in the step 56.

The bracket 22 includes a stop 61 and a flange 62. The stop 61 has a substantially cylindrical shape, and is fitted into the fitting hole 51. The fitting hole 51 forms a part of the inner space of the frame 21, to accommodate the stop 61. The stop 61 has an outer circumferential face 63 and an end face 64. The end face 64 represents an example of the second face.

The outer circumferential face 63 is a substantially cylindrical curved face extending in the axial direction. The diameter of the outer circumferential face 63 is equal to or slightly shorter than the diameter of the inner circumferential face 52. In the axial direction, the length of the outer circumferential face 63 is substantially equal to the length of the inner circumferential face 52.

The outer circumferential face 63 faces in the outward radial direction. The outer circumferential face 63 opposes the inner circumferential face 52. The outer circumferential face 63 may be in contact with the inner circumferential face 52 or may be slightly away from the inner circumferential face 52. The outer circumferential face 63 and the inner circumferential face 52 are substantially concentric and parallel to each other.

The end face 64 is located at the end of the stop 61 in the inward axial direction Dxi. Note that the end face 64 may be located at another position. A radially outside end 64a of the end face 64 is connected to the end of the outer circumferential face 63 in the inward axial direction Dxi. A radially outside end 64b of the end face 64 is connected to an edge 42a of the partial inner face 42 of the bracket 22. The edge 42a represents an example of the second edge.

The end face 64 is, for example, a substantially annular flat face extending in the inward radial direction from the end of the outer circumferential face 63. The end face 64 faces in the inward axial direction Dxi. Hence, the end face 64 intersects the axial direction. Note that the end face 64 may face in another direction intersecting the direction the inner circumferential face 52 faces.

The end face 64 opposes the stepped face 54. The end face 64 may be in contact with the stepped face 54 or may be slightly away from the stepped face 54. The end face 64 and the stepped face 54 are substantially concentric and parallel to each other.

The flange 62 protrudes outwards from the stop 61 in the radial direction to cover the joint face 53 of the frame 21. The flange 62 has a joint face 65. The joint face 65 represents an example of the second joint face. The joint face 65 is, for example, located at the end of the flange 62 in the inward axial direction Dxi. Note that the joint face 65 may be located at another position. The joint face 65 is connected to the end of the outer circumferential face 63 in the outward axial direction Dxo.

The joint face 65 is, for example, a substantially annular flat face extending outwards in the radial direction from the end of the outer circumferential face 63. The joint face 65 faces in the inward axial direction Dxi. Note that the joint face 65 may face in another direction that intersects the direction the inner circumferential face 52 faces.

The joint face 65 opposes the joint face 53 of the frame 21. The joint face 65 may be in contact with the joint face 53 or may be slightly away from the joint face 53. The joint face 65 and the joint face 53 are substantially concentric and parallel to each other.

The radial length of the end face 64 is shorter than the axial length of the outer circumferential face 63. In other words, the distance between the end 64a and the end 64b of the end face 64 is shorter than the distance between the joint face 65 and the end face 64.

The joint face 65 is provided with a through-hole 66. In other words, the bracket 22 is provided with the through-hole 66 opening to the joint face 65. The through-hole 66 represents an example of the third hole. The through-hole 66 passes through the flange 62 in the axial direction. The through-hole 66 has a diameter that allows the first bolt 25 to pass therethrough. The through-hole 66 communicates with the bolt hole 55.

The first bolt 25 is inserted into the bolt hole 55 of the frame 21 from the outside of the housing 14 through the through-hole 66 of the bracket 22. In other words, the first bolt 25 is fitted into the through-hole 66 and the bolt hole 55. The first bolt 25 thus joins the frame 21 and the bracket 22 together.

As described above, the stepped face 54 of the frame 21 is connected to the edge 41a of the partial inner face 41. In addition, the end face 64 of the bracket 22 is connected to the edge 42a of the partial inner face 42. Hence, the stepped face 54 and the end face 64 are connected to the inner face 40.

The edge 41a of the partial inner face 41 faces inwards in the radial direction. The edge 42a of the partial inner face 42 faces inwards in the radial direction. The edge 41a of the partial inner face 41 and the edge 42a of the partial inner face 42 are located substantially at the same position in the radial direction. Thereby, the partial inner face 41 and the partial inner face 42 form a substantially continuous and smooth face.

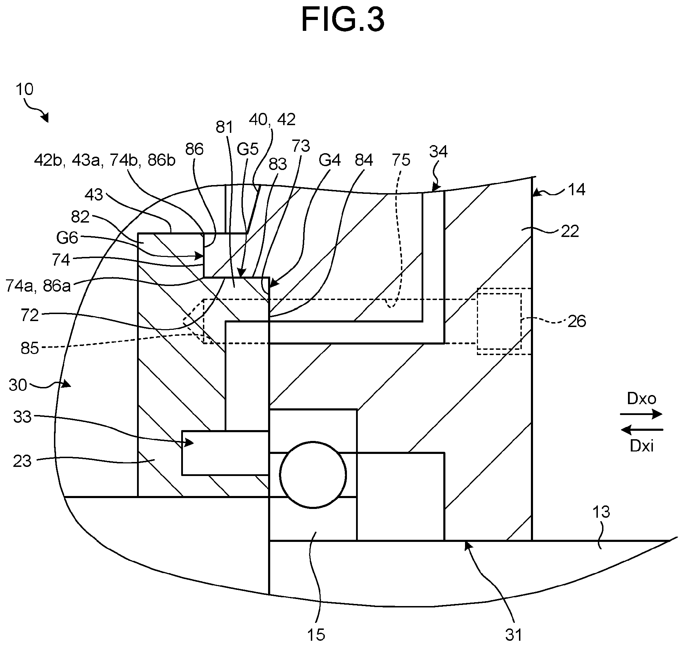

FIG. 3 is a cross-sectional view illustrating the bracket 22 and the oil thrower 23 of this embodiment. In the illustrated example in FIG. 3, the bracket 22 represents an example of the first member, and the oil thrower 23 represents an example of the second member.

As described above, the insertion hole 31 passes through the bracket 22 in the axial direction. The insertion hole 31 allows the room 30 to communicate with the outside of the housing 14 therethrough. The insertion hole 31 represents an example of the first hole. The axial direction represents an example of the first direction.

The bracket 22 has an inner circumferential face 72, a joint face 73, and an end face 74. The joint face 73 represents an example of the first joint face. The end face 74 represents an example of the first face.

The inner circumferential face 72 is a substantially cylindrical curved face extending in the axial direction. The inner circumferential face 72 forms, defines, or demarcates a part of the insertion hole 31. The inner circumferential face 72 faces inwards in the radial direction. In other words, the inner circumferential face 72 faces inside of the insertion hole 31.

The joint face 73 is connected to the end of the inner circumferential face 72 in the outward axial direction Dxo. The outward axial direction Dxo represents an example of the first direction. The joint face 73 is, for example, a substantially annular flat face extending inwards from the end of the inner circumferential face 72 in the radial direction.

The joint face 73 faces in the inward axial direction Dxi. The inward axial direction Dxi orthogonally intersects the direction the inner circumferential face 72 faces. The inward axial direction Dxi represents an example of a direction that intersects the direction that the inner circumferential face faces. Note that the joint face 73 may face in another direction that intersects the direction that the inner circumferential face 72 faces.

The joint face 73 is provided with a through-hole 75. In other words, the bracket 22 is provided with the through-hole 75 opening to the joint face 73. The through-hole 75 represents an example of the second hole. The through-hole 75 passes through the bracket 22 in the axial direction. The through-hole 75 has a diameter that allows the second bolt 26 to pass therethrough. The oil passage 34 opens to the joint face 73.

The end face 74 is, for example, spaced away from the joint face 73 in the inward axial direction Dxi. The inward axial direction Dxi represents an example of the second direction. An radially inside end 74a of the end face 74 is connected to an end of the inner circumferential face 72 in the inward axial direction Dxi. The end 74a represents an example of the first end. A radial outside end 74b of the end face 74 is connected to an edge 42b of the partial inner face 42 of the bracket 22. The end 74b is opposite to the end 74a. The end 74b represents an example of the second end. The edge 42b represents an example of the first edge.

The end face 74 is, for example, a substantially annular flat face extending outwards from the end of the inner circumferential face 72 in the radial direction. The end face 74 faces in the inward axial direction Dxi. Hence, the end face 74 intersects the axial direction. Note that the end face 74 may face in another direction intersecting the direction that the inner circumferential face 72 faces. The end face 74 faces a different direction from the joint face 73.

The radial length of the end face 74 is shorter than the axial length of the inner circumferential face 72. In other words, the distance between the end 74a and the end 74b of the end face 74 is shorter than the distance between the joint face 73 and the end face 74.

The oil thrower 23 includes a stop 81 and a flange 82. The flange 82 represents an example of the second protrusion. The stop 81 has a substantially cylindrical shape, and is fitted into a part of the insertion hole 31. The stop 81 has an outer circumferential face 83 and a joint face 84. The joint face 84 represents an example of the second joint face.

The outer circumferential face 83 is a substantially cylindrical curved face extending in the axial direction. The diameter of the outer circumferential face 83 is equal to or slightly shorter than the diameter of the inner circumferential face 72. In the axial direction, the length of the outer circumferential face 83 is substantially equal to the length of the inner circumferential face 72.

The outer circumferential face 83 faces outwards in the radial direction. The outer circumferential face 83 opposes the inner circumferential face 72. The outer circumferential face 83 may be in contact with the inner circumferential face 72 or may be slightly away from the inner circumferential face 72. The outer circumferential face 83 and the inner circumferential face 72 are substantially concentric and parallel to each other.

The joint face 84 is located at the end of the stop 8 in the outward axial direction Dxo. Note that the joint face 84 may be located at another position. The joint face 84 is, for example, a substantially annular flat face extending inwards from the end of the outer circumferential face 83 in the radial direction. The joint face 84 faces in the outward axial direction Dxo. Note that the joint face 84 may face in another direction that intersects the direction the inner circumferential face 72 faces.

The joint face 84 opposes the joint face 73 of the bracket 22. The joint face 84 may be in contact with the joint face 73 or may be slightly away from the joint face 73. The joint face 84 and the joint face 73 are substantially concentric and parallel to each other.

The joint face 84 is provided with a bolt hole 85. In other words, the oil thrower 23 is provided with the bolt hole 85 opening to the joint face 84. The bolt hole 85 represents an example of the third hole. The bolt hole 85 extends from the joint face 84 in the axial direction. The bolt hole 85 communicates with the through-hole 75. The bolt hole 85 has a female screw threaded inside. The female screw of the bolt hole 85 can be screwed with a male screw threaded on the second bolt 26.

The second bolt 26 is inserted into the bolt hole 85 of the oil thrower 23 from the outside of the housing 14 through the through-hole 75 of the bracket 22. In other words, the second bolt 26 is fitted into the through-hole 75 and the bolt hole 85. The second bolt 26 thus joins the bracket 22 and the oil thrower 23 together.

The flange 82 protrudes outwards from the outer circumferential face 83 of the stop 81 in the radial direction. The flange 82 covers the joint face 73 of the bracket 22. The flange 82 has a side face 86. The side face 86 represents an example of the second face. The side face 86 is, for example, located at the end of the flange 82 in the outward axial direction Dxo. Note that the side face 86 may be located at another position. The side face 86 is connected to the end of the outer circumferential face 83 in the inward axial direction Dxi.

The side face 86 is, for example, a substantially annular flat face extending outwards from the end of the outer circumferential face 83 in the radial direction. The side face 86 faces in the outward axial direction Dxo. Hence, the side face 86 intersects the axial direction. Note that the side face 86 may face in another direction that intersects the direction the inner circumferential face 72 faces.

The side face 86 opposes the end face 74. The side face 86 may be in contact with the end face 74 or may be slightly away from the end face 74. The side face 86 and the end face 74 are substantially concentric and parallel to each other.

An radially inside end 86a of the side face 86 is connected to the end of the outer circumferential face 83 in the inward axial direction Dxi. A radial outside end 86b of the side face 86 is connected to an edge 43a of the partial inner face 43 of the oil thrower 23. The edge 43a represents an example of the second edge.

The radial length of the side face 86 is shorter than the axial length of the outer circumferential face 83. In other words, the distance between the end 86a and the end 86b of the side face 86 is shorter than the distance between the joint face 84 and the side face 86.

As described above, the end face 74 of the bracket 22 is connected to the edge 42b of the partial inner face 42. In addition, the side face 86 of the oil thrower 23 is connected to the edge 43a of the partial inner face 43. Hence, the end face 74 and the side face 86 are connected to the inner face 40.

The edge 42b of the partial inner face 42 faces outwards in the radial direction. The edge 43a of the partial inner face 43 faces outwards in the radial direction. The edge 42b of the partial inner face 42 and the edge 43a of the partial inner face 43 are located substantially at the same position in the radial direction. Hence, the partial inner face 42 and the partial inner face 43 form a substantially continuous and smooth face.

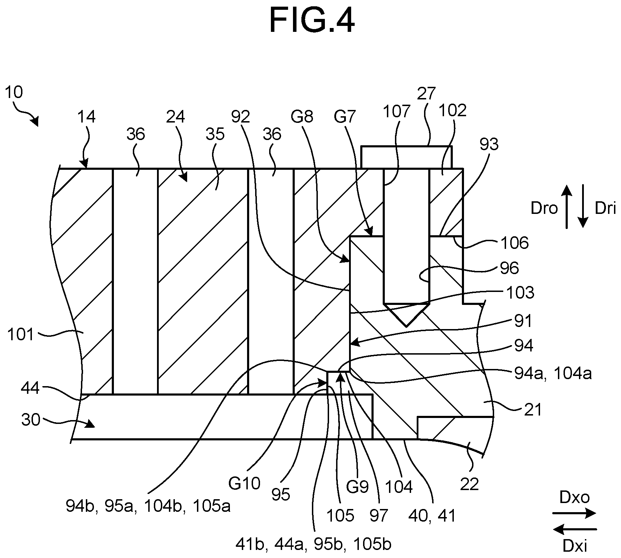

FIG. 4 is a cross-sectional view illustrating the frame 21 and the terminal board 24 of this embodiment. In the example illustrated in FIG. 2, the frame 21 represents an example of the first member, and the terminal board 24 represents an example of the second member.

The frame 21 is provided with two fitting holes 91. The two fitting holes 91 of the frame 21 allow the room 30 to communicate with the outside of the housing 14 therethrough. The fitting holes 91 represent an example of the first hole. Each fitting hole 91 passes through the frame 21 in the radial direction. The radial direction represents an example of the first direction. The two fitting holes 91 are spaced away from each other in the axial direction.

The frame 21 has an inner circumferential face 92, a joint face 93, a first stepped face 94, and a second stepped face 95. The joint face 93 represents an example of the first joint face. The first stepped face 94 represents an example of the first face.

The inner circumferential face 92 is a substantially cylindrical face extending in the radial direction. The inner circumferential face 92 forms, defines, or demarcates a part of the fitting hole 91. The inner circumferential face 92 faces inside of the fitting hole 91.

The joint face 93 is connected to the end of the inner circumferential face 92 in an outward radial direction Dro. The outward radial direction Dro refers to a direction towards the outside of the housing 14 in the radial direction in which the fitting hole 91 extends, among a plurality of radial directions. The outward radial direction Dro is included in the radial direction. The outward radial direction Dro represents an example of the first direction.

The joint face 93 is, for example, a substantially annular flat face extending from the end of the inner circumferential face 92 in a direction orthogonal to the radial direction. The joint face 93 faces in the outward radial direction Dro. The outward radial direction Dro orthogonally intersects a direction the inner circumferential face 92 faces. The outward radial direction Dro represents an example of the direction that orthogonally intersects the direction the inner circumferential face faces. Note that the joint face 93 may face in another direction that intersects the direction the inner circumferential face 92 faces.

The joint face 93 is provided with a bolt hole 96. In other words, the frame 21 is provided with the bolt hole 96 opening to the joint face 93. The bolt hole 96 represents an example of the second hole. The bolt hole 96 extends in the radial direction from the joint face 93. The bolt hole 96 has a female screw threaded inside. The female screw of the bolt hole 96 can be screwed with a male screw threaded on the third bolts 27.

The first stepped face 94 is, for example, spaced away from the joint face 93 in an inward radial direction Dri. The inward radial direction Dri refers to a direction towards the inside of the housing 14 in the radial direction in which the fitting hole 91 extends, among a plurality of radial directions. The inward radial direction Dri is included in the radial direction. The inward radial direction Dri is opposite to the outward radial direction Dro, and represents an example of the second direction.

An end 94a of the first stepped face 94 in the direction orthogonal to the radial direction is connected to the end of the inner circumferential face 92 in the inward radial direction Dri. The other end 94b of the first stepped face 94 in the direction orthogonal to the radial direction is connected to the second stepped face 95. The end 94b is opposite to the end 94a.

The first stepped face 94 is, for example, a substantially annular flat face extending from the end of the inner circumferential face 92 in the direction orthogonal to the radial direction. The first stepped face 94 faces in the outward radial direction Dro. Hence, the first stepped face 94 intersects the radial direction. Note that the first stepped face 94 may face in another direction that intersects the direction the inner circumferential face 92 faces. The first stepped face 94 may face in a different direction from the joint face 93.

The length of the first stepped face 94 in the direction orthogonal to the radial direction is shorter than the radial length of the inner circumferential face 92. In other words, the distance between the end 94a and the end 94b of the first stepped face 94 is shorter than the distance between the joint face 93 and the first stepped face 94.

The second stepped face 95 is a substantially cylindrical face extending from the first stepped face 94 in the inward radial direction Dri. The second stepped face 95 forms, defines, or demarcates a part of the fitting hole 91. The second stepped face 95 faces inside of the fitting hole 91.

An end 95a of the second stepped face 95 in the outward radial direction Dro is connected to the end 94b of the first stepped face 94. An end 95b of the second stepped face 95 in the inward radial direction Dri is connected to an edge 41b of the partial inner face 41 of the frame 21. The end 95b is opposite to the end 95a.

The second stepped face 95 is shorter in length than the inner circumferential face 92 in the radial direction. In other words, the distance between the end 95a and the end 95b of the second stepped face 95 is shorter than the distance between the joint face 93 and the first stepped face 94.

The frame 21 further includes a step 97. The step 97 represents an example of the first protrusion. The step 97 protrudes from the inner circumferential face 92. The step 97 is away from the joint face 93 in the inward radial direction Dri. The first stepped face 94 and the second stepped face 95 are included in the step 97.

The cover 35 of the terminal board 24 includes a stop 101 and a flange 102. The stop 101 has a substantially columnar shape, and is fitted into the fitting hole 91. Hence, the stop 101 closes the fitting hole 91. The stop 101 has an outer circumferential face 103, a first stepped face 104 and a second stepped face 105. The first stepped face 104 represents an example of the second face.

The outer circumferential face 103 is a substantially cylindrical face extending in the radial direction. The size of the outer circumferential face 103 is equal to or slightly smaller than the size of the inner circumferential face 92. In the radial direction, the length of the outer circumferential face 103 is substantially equal to the length of the inner circumferential face 92.

The outer circumferential face 103 opposes the inner circumferential face 92. The outer circumferential face 103 may be in contact with the inner circumferential face 92 or may be slightly away from the inner circumferential face 92. The outer circumferential face 103 and the inner circumferential face 92 are substantially parallel to each other.

An end 104a of the first stepped face 104 in the direction orthogonal to the radial direction is connected to the end of the outer circumferential face 103 in the inward radial direction Dri. The other end 104b of the first stepped face 104 in the direction orthogonal to the radial direction is connected to the second stepped face 105.

The first stepped face 104 is, for example, a substantially annular flat face extending from the end of the outer circumferential face 103. The first stepped face 104 faces in the inward radial direction Dri. Hence, the first stepped face 104 intersects the radial direction. Note that the first stepped face 104 may face in another direction that intersects the direction the inner circumferential face 92 faces.

The first stepped face 104 opposes the first stepped face 94 of the frame 21. The first stepped face 104 may be in contact with the first stepped face 94 or may be slightly away from the first stepped face 94. The first stepped faces 94, 104 of the frame 21 and the cover 35 are substantially parallel to each other.

The second stepped face 105 is a substantially cylindrical face extending from the first stepped face 104 in the inward radial direction Dri. An end 105a of the second stepped face 105 in the outward radial direction Dro is connected to the end 104b of the first stepped face 104. An end 105b of the second stepped face 105 in the inward radial direction Dri is connected to the edge 44a of the partial inner face 44 of the terminal board 24. The end 105b is opposite to the end 105a.

The second stepped face 105 opposes the second stepped face 95 of the frame 21. The second stepped face 105 may be in contact with the second stepped face 95 or may be slightly away from the second stepped face 95. The second stepped faces 95, 105 of the frame 21 and the cover 35 are substantially parallel to each other.

The flange 102 protrudes from the stop 101 in the outward radial direction to cover the joint face 93 of the frame 21. The flange 102 has a joint face 106. The joint face 106 represents an example of the second joint face. The joint face 106 is, for example, located at the end of the flange 102 in the inward radial direction Dri. Note that the joint face 106 may be located at another position. The joint face 106 is connected to the end of the outer circumferential face 103 in the outward radial direction Dro.

The joint face 106 is, for example, a substantially annular flat face extending from the end of the outer circumferential face 103. The joint face 106 faces in the inward radial direction Dri. Note that the joint face 106 may face in another direction that intersects the direction the inner circumferential face 92 faces.

The joint face 106 opposes the joint face 93 of the frame 21. The joint face 106 may be in contact with the joint face 93 or may be slightly away from the joint face 93. The joint face 106 and the joint face 93 are substantially parallel to each other.

The length of the first stepped face 104 in the direction orthogonal to the radial direction is shorter than the radial length of the outer circumferential face 103. In other words, the distance between the end 104a and the end 104b of the first stepped face 104 is shorter than the distance between the joint face 106 and the first stepped face 104. In addition, the distance between an end 105a and an end 105b of the second stepped face 105 is shorter than the distance between the joint face 106 and the first stepped face 104.

The joint face 106 is provided with a through-hole 107. In other words, the cover 35 is provided with the through-hole 107 opening to the joint face 106. The through-hole 107 represents an example of the third hole. The through-hole 107 passes through the flange 102 in the radial direction. The through-hole 107 has a diameter that allows the third bolt 27 to pass therethrough. The through-hole 107 communicates with the bolt hole 96.

The third bolt 27 is inserted into the bolt hole 96 of the frame 21 from the outside of the housing 14 through the through-hole 107 of the cover 35. In other words, the third bolt 27 is fitted into the through-hole 107 and the bolt hole 96. The third bolt 27 thus joins the frame 21 and the cover 35 together.

As described above, the second stepped face 95 of the frame 21 is connected to the edge 41b of the partial inner face 41. In addition, the second stepped face 105 of the cover 35 is connected to the edge 44a of the partial inner face 44. Hence, the second stepped faces 95 and 105 are connected to the inner face 40.

The edge 41b of the partial inner face 41 faces in the inward radial direction Dri. The edge 44a of the partial inner face 44 faces in the inward radial direction Dri. The edge 41b of the partial inner face 41 and the edge 44a of the partial inner face 44 are located substantially at the same position in the radial direction. Hence, the partial inner face 41 and the partial inner face 44 substantially form a continuous and smooth face.

In case of an explosion inside the room 30, the electric motor 10 as an explosion proof motor can restrict sparks from the explosion from reaching the outside of the housing 14. The following will explain an exemplary situation that an explosion has occurred inside the room 30. Note that the electric motor 10 includes various elements to be able to avoid occurrence of an explosion inside the room 30.

As illustrated in FIG. 2, there may be gaps G1, G2 and G3 between the frame 21 and the bracket 22. The gap G1 lies between the joint face 53 and the joint face 65. The gap G2 lies between the inner circumferential face 52 and the outer circumferential face 63. The gap G3 lies between the stepped face 54 and the end face 64.

The gap G1 extends in the radial direction to communicate with the outside of the housing 14. The gap G1 further communicates with the outside of the housing 14 through the through-hole 66. The gap G3 extends in the radial direction to communicate with the room 30. The gap G2 extends in the axial direction and allows the gap G1 and the gap G3 to be in mutual communication therethrough. Through the gaps G1, G2 and G3 and the through-hole 66, thus, the room 30 may be in communication with the outside of the housing 14.

An occurrence of explosion inside the room 30 may cause sparks and the sparks may enter the gap G3. The sparks will however collide with the inner circumferential face 52 at the connect point between the gap G3 and the gap G2, and lose pressure. The sparks are thus depressurized, and fly in the axial direction in the gap G2 longer than the gap G3. In this manner, the electric motor 10 can extinguish the sparks in the gap G2.

As illustrated in FIG. 3, there may be gaps G4, G5 and G6 between the bracket 22 and the oil thrower 23. The gap G4 lies between the joint face 73 and the joint face 84. The gap G5 lies between the inner circumferential face 72 and the outer circumferential face 83. The gap G6 lies between the end face 74 and the side face 86.

The gap G4 extends in the radial direction. The gap G4 is in communication with the outside of the housing 14 through the bearing chamber 33 and through the gap between the shaft 13 and the bracket 22. The gap G4 further communicates with the outside of the housing 14 through the bearing chamber 33 and the through-hole 75. The gap G6 extends in the radial direction to communicate with the room 30. The gap G5 extends in the axial direction and allows the gap G4 and the gap G6 to be in mutual communication therethrough. Through the gaps G4, G5 and G6 and the through-hole 75, thus, the room 30 may be in communication with the outside of the housing 14.

An occurrence of explosion inside the room 30 may cause sparks and the sparks may enter the gap G6. The sparks will however collide with the outer circumferential face 83 at the connect point between the gap G6 and the gap G5, and lose pressure. The sparks are thus depressurized and fly in the axial direction in the gap G5 longer than the gap G6. In this manner, the electric motor 10 can extinguish the sparks in the gap G5.

As illustrated in FIG. 4, there may be gaps G7, G8, G9, and G10 between the frame 21 and the terminal board 24. The gap G7 lies between the joint face 93 and the joint face 106. The gap G8 lies between the inner circumferential face 92 and the outer circumferential face 103. The gap G9 lies between the first stepped face 94 and the first stepped face 104. The gap G10 lies between the second stepped face 95 and the second stepped face 105.

The gap G7 extends in the direction orthogonal to the radial direction to communicate with the outside of the housing 14. The gap G7 further communicates with the outside of the housing 14 through the through-hole 107. The gap G10 extends in the radial direction to communicate with the room 30. The gap G8 extends in the radial direction and allows the gap G7 and the gap G9 to be in mutual communication therethrough. The gap G9 extends in the direction orthogonal to the radial direction, and allows the gap G8 and the gap G10 to be in mutual communication therethrough. Through the gaps G7, G8, G9, and G10 and the through-hole 107, thus, the room 30 may be in communication with the outside of the housing 14.

An occurrence of explosion inside the room 30 may cause sparks and the sparks may enter the gap G10. The sparks will, however, collide with the first stepped face 104 at the connect point between the gap G10 and the gap G9, and lose pressure. The depressurized sparks fly in the gap G9 in the direction orthogonal to the radial direction. In this manner, the electric motor 10 can extinguish the sparks in the gap G9.

The sparks may fly through the gap G9. The sparks will, however, collide with the inner circumferential face 92 at the connect point between the gap G8 and the gap G9, and lose pressure. The sparks are depressurized and fly in the radial direction in the gap G8, which is longer than the gap G9. In this manner, the electric motor 10 can extinguish the sparks in the gap G8.

In the rotating electrical machine (10) according to the aforementioned embodiment, the housing (14) includes a first member (21; 22), a second member (22; 23; 24), and a bolt (25; 26; 27). The bolt (25; 26; 27) works to join the first member (21; 22) and the second member (22; 23; 24). The housing (14) is provided with the room (30) that accommodates the stator (11) and the rotor (12). The first member (21; 22) is provided with a first hole (51; 31; 91) passing through the first member (21; 22) in a first direction (Dxo; Dro) so as to allow the room (30) to communicate with the outside of the housing (14) therethrough. The first member (21; 22) has an inner circumferential face (52; 72; 92), a first joint face (53; 73; 93), and a first face (54; 74; 94). The inner circumferential face (52; 72; 92) faces inside of the first hole (51; 31; 91). The first joint face (53; 73; 93) is connected to the end of the inner circumferential face (52; 72; 92) in the first direction (Dxo; Dro), faces in a direction intersecting the direction that the inner circumferential face (52; 72; 92) faces, and is provided with a second hole (55; 75; 96) into which the bolt (25; 26; 27) is fitted. The first face (54; 74; 94) is connected to the end of the inner circumferential face (52; 72; 92) in a second direction (Dxi; Dri) opposite to the first direction (Dxo; Dro), and face in a direction intersecting the direction that the inner circumferential face (52; 72; 92) faces. The second member (22; 23; 24) is fitted into the first hole (51; 31; 91). The second member (22; 23; 24) has an outer circumferential face (63; 83; 103), a second joint face (65; 84; 106), and a second face (64; 86; 104). The outer circumferential face (63; 83; 103) opposes the inner circumferential face (52; 72; 92). The second joint face (65; 84; 106) is connected to the end of the outer circumferential face (63; 83; 103) in the first direction (Dxo; Dro), faces the first joint face (53; 73; 93), and is provided with a third hole (66; 85; 107) into which the bolt (25; 26; 27) is fitted. The second face (64; 86; 104) is connected to the end of the outer circumferential face (63; 83; 103) in the second direction (Dxi; Dri), and faces the first face (54; 74; 94). In the rotating electrical machine (10) as structured above, a gap may occur between the inner circumferential face (52; 72; 92) and the outer circumferential face (63; 83; 103), between the first joint face (53; 73; 93) and the second joint face (65; 84; 106), and between the first face (54; 74; 94) and the second face (64; 86; 104). The first joint face (53; 73; 93) and the second joint face (65; 84; 106) are joined together with the bolt (25; 26; 27), and the gap therebetween may communicate with the room (30) through the gap between the inner circumferential face (52; 72; 92) and the outer circumferential face (63; 83; 103) and through the gap between the first face (54; 74; 94) and the second face (64; 86; 104). The gap between the inner circumferential face (52; 72; 92) and the outer circumferential face (63; 83; 103) extends in a different direction from the gap between the first joint face (53; 73; 93) and the second joint face (65; 84; 106) and the gap between the first face (54; 74; 94) and the second face (64; 86; 104). For this reason, in case of occurrence of an explosion inside the room (30), sparks may arise from the explosion and enter the gap between the first face (54; 74; 94) and the second face (64; 86; 104), however, the sparks will collide with the inner circumferential face (52; 72; 92) or the outer circumferential face (63; 83; 103). Thereby, the rotating electrical machine (10) of this embodiment can cause a pressure loss of the sparks by the collision and can restrict the sparks from reaching the outside of the housing (14) through the gap between the first joint face (53; 73; 93) and the second joint face (65; 84; 106) and the through-hole (66; 75; 107). Further, the gap between the first face (54; 74; 94) and the second face (64; 86; 104) extends in a different direction from the gap between the inner circumferential face (52; 72; 92) and the outer circumferential face (63; 83; 103). Hence, the rotating electrical machine (10) can elongate the distance (creepage distance) from the room (30) to the outside of the housing (14) and can restrict the sparks from reaching the outside of the housing (14) without its enlargement in size in the extending direction of the gap between the inner circumferential face (52; 72; 92) and the outer circumferential face (63; 83; 103).

The housing (14) has the inner face (40) that defines the room (30). At least either of the first face (54; 74; 94) and the second face (64; 86; 104) is connected to the inner face (40) and intersects the axial direction of the shaft (13). Thereby, the gap between the first face (54; 74; 94) and the second face (64; 86; 104) extends in the direction intersecting the axial direction. The room (30) typically extends in the axial direction of the shaft (13). An explosion, if it occurs inside the room (30), thus tends to expand in the axial direction of the shaft (13). In view of this, the rotating electrical machine (10) of this embodiment is provided with the extended gap between the first face (54; 74; 94) and the second face (64; 86; 104) in the direction intersecting the axial direction of the shaft (13) in which the explosion is likely to expand. In this manner, the rotating electrical machine (10) can restrict the sparks from entering the gap between the first face (54; 74; 94) and the second face (64; 86; 104).

The inner face (40) has a first inner face (41; 42) and a second inner face (42; 43; 44). The first inner face (41; 42) is included in the first member (21; 22). The second inner face (42; 43; 44) is included in the second member (22; 23; 24). The first face (54; 74; 94) is connected to the first edge (41a; 41b; 42b) of the first inner face (41; 42). The second face (64; 86; 104) is connected to the second edge (42a; 43a; 44a) of the second inner face (42; 43; 44). The first edge (41a; 41b; 42b) and the second edge (42a; 43a; 44a) are located at the same position in the direction that at least either of the first face (54; 74; 94) and the second face (64; 86; 104) faces. The first edge (41a; 41b; 42b) and the second edge (42a; 43a; 44a) of the first inner face (41; 42) and the second inner face (42; 43; 44) thus form a substantially continuous and smooth face. Thereby, in case of occurrence of an explosion inside the room (30), sparks from the explosion are more likely to flow along the continuous first inner face (41; 42) and second inner face (42; 43; 44). In this manner, the rotating electrical machine (10) of this embodiment can restrict the sparks from entering the gap between the first face (54; 74; 94) and the second face (64; 86; 104).

The first face (54; 74; 94) has a first end (54a; 74a; 94a) connected to the inner circumferential face (52; 72; 92), and a second end (54b; 74b; 94b) opposite to the first end (54a; 74a; 94a). The distance between the first end (54a; 74a; 94a) and the second end (54b; 74b; 94b) is shorter than the distance between the first joint face (53; 73; 93) and the first face (54; 74; 94). That is, the gap between the first face (54; 74; 94) and the second face (64; 86; 104) is shorter in length (creepage distance) than the gap between the inner circumferential face (52; 72; 92) and the outer circumferential face (63; 83; 103). Because of this, upon entering the gap between the first face (54; 74; 94) and the second face (64; 86; 104), the sparks immediately lose pressure. The rotating electrical machine (10) of this embodiment can therefore immediately weaken the force of the sparks and restrict the sparks from reaching the outside of the housing (14).

The first face (54; 94) is included in the first protrusion (56; 97) protruding from the inner circumferential face (52; 92). Thereby, the first protrusion (56; 97) can support the second member (22; 24). The rotating electrical machine (10) of this embodiment can therefore be enhanced in strength at the joint between the first member (21) and the second member (22; 24).

The second face (86) is included in the second protrusion (82) protruding from the outer circumferential face (83). Thereby, the second protrusion (82) can be supported by the first member (22). The rotating electrical machine (10) of this embodiment can therefore be enhanced in strength at the joint between the first member (22) and the second member (23).

The first member (21) includes a frame (21). The frame (21) is fixed to the stator (11) to surround the stator (11) and the rotor (12). The second member (22) includes the bracket (22). The bracket (22) closes the end (21a) of the frame (21) in the axial direction of the shaft (13). Thereby, the rotating electrical machine (10) of this embodiment can restrict the sparks from reaching the outside of the housing (14) through the gap between the frame (21) and the bracket (22).

The housing (14) includes the frame (21), the bracket (22), and a wall (23). The frame (21) is fixed to the stator (11) to surround the stator (11) and the rotor (12). The bracket (22) closes the end (21a) of the frame (21) in the axial direction of the shaft (13). The wall (23) is attached to the bracket (22). The bearing (15) is located between the wall (23) and the bracket (22), and rotatably supports the shaft (13). Either of the first member (22) and the second member (23) includes the bracket (22). The other of the first member (22) and the second member (23) includes the wall (23). By such a structure, the rotating electrical machine (10) of this embodiment can restrict the sparks from reaching the outside of the housing (14) through the gap between the bracket (22) and the wall (23).

The first member (21) includes the frame (21). The frame (21) is fixed to the stator (11) to surround the stator (11) and the rotor (12). The second member (24) includes a cover (35) and a terminal (36). The cover (35) closes the first hole (91). The terminal (36) passes through the cover Thereby, the rotating electrical machine (10) of this embodiment can restrict the sparks from reaching the outside of the housing (14) through the gap between the frame (21) and the cover (35).

In the explanation above, suppression is defined for example to suppress occurrence of event, action or influence, or to reduce magnitude of event, action or influence. Also in the explanation above, limitation is defined for example to prevent displacement or rotation, or to allow displacement or rotation only within a predetermined range, while preventing displacement or rotation beyond the predetermined range.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the invention, which is defined by the appended claims. The accompanying claims are intended to cover such forms or modifications as would fall within the scope of the invention.

## Claims

1. A rotating electrical machine (10) comprising:
a stator (11);
a rotor (12) configured to rotate inside the stator (11);
a shaft (13) configured to rotate together with the rotor (12); and
a housing (14) with a room (30) that accommodates the stator (11) and the rotor (12), the housing including a first member (22; 23),
a second member (23; 22), and a bolt (26) that joins the first member (22; 23) and the second member (23; 22), together, wherein
the first member (22; 23) includes:
a first hole (31) passing through the first member (22; 23) in a first direction (Dxo), the first hole that allows the room (30) to communicate with an outside of the housing (14);
an inner circumferential face (72) that faces inside of the first hole (31);
a first joint face (73) connected to an end of the inner circumferential face (72) in the first direction (Dxo), facing in a direction intersecting the direction that the inner circumferential face (72) faces, and provided with a second hole (75) into which the bolt (26) is fitted; and
a first face (74) connected to an end of the inner circumferential face (72) in a second direction (Dxi) opposite to the first direction (Dxo) and facing in a direction intersecting the direction that the inner circumferential face (72) faces,
the second member (23; 22), is fitted into the first hole (31), and includes:
an outer circumferential face (83) opposing the inner circumferential face (72),
a second joint face (84) connected to an end of the outer circumferential face (83) in the first direction (Dxo), opposing the first joint face (73), and provided with a third hole (85) into which the bolt (26) is fitted; and
a second face (86) connected to an end of the outer circumferential face (83) in the second direction (Dxi), and opposing the first face (74),
the housing (14) has an inner face (40) that defines the room (30), and
at least either of the first face (74) and the second face (86) is connected to the inner face (40), and intersects an axial direction of the shaft (13),
the inner face (40) has a first inner face (41) included in the first member (22**;** 23), and a second inner face (42) included in the second member (23; 22),
the first face (74) is connected to a first edge (42b) of the first inner face (41),
the second face (86) is connected to a second edge (43a) of the second inner face (42), and
the first edge (42b) and the second edge (43a) are located at the same position in a direction that at least either of the first face (74) and the second face (86) faces,
**characterized in that** the rotating electrical machine (10) further comprises:
a bearing (15) that rotatably supports the shaft (13), wherein
the housing (14) includes a frame (21) fixed to the stator (11) to surround the stator (11) and the rotor (12); a bracket (22) that closes an end of the frame (21) in an axial direction of the shaft (13); and a wall (23) attached to the bracket (22),
the bearing (15) is located between the wall (23) and the bracket (22),
one of the first member (22; 23) and the second member (23; 22) includes the bracket (22), and
the other of the first member (22; 23) and the second member (23; 22) includes the wall (23).

2. A rotating electrical machine (10) comprising:
a stator (11);
a rotor (12) configured to rotate inside the stator (11);
a shaft (13) configured to rotate together with the rotor (12); and
a housing (14) with a room (30) that accommodates the stator (11) and the rotor (12), the housing including a first member (21), a second member (24), and a bolt (27) that joins the first member (21) and the second member (24) together, wherein
the first member (21) includes:
a first hole (91) passing through the first member (21) in a first direction (Dro), the first hole that allows the room (30) to communicate with an outside of the housing (14);
an inner circumferential face (92) that faces inside of the first hole (91);
a first joint face (93) connected to an end of the inner circumferential face (92) in the first direction (Dro), facing in a direction intersecting the direction that the inner circumferential face (92) faces, and provided with a second hole (96) into which the bolt (27) is fitted; and
a first face (94) connected to an end of the inner circumferential face (92) in a second direction (Dri) opposite to the first direction (Dro), and facing in a direction intersecting the direction that the inner circumferential face (92) faces,
the second member (24) is fitted into the first hole (91), and includes:
an outer circumferential face (103) opposing the inner circumferential face (92),
a second joint face (106) connected to an end of the outer circumferential face (103) in the first direction (Dro), opposing the first joint face (93), and provided with a third hole (107) into which the bolt (27) is fitted; and
a second face (104) connected to an end of the outer circumferential face (103) in the second direction (Dri), and opposing the first face (94),
the housing (14) has an inner face (40) that defines the room (30), and
at least either of the first face (94) and the second face (104) is connected to the inner face (40), and intersects an axial direction of the shaft (13),
the inner face (40) has a first inner face (41) included in the first member (21), and a second inner face (42) included in the second member (24),
the first face (94) is connected to a first edge (41b) of the first inner face (41),
the second face (104) is connected to a second edge (44a) of the second inner face (42), and
the first edge (41b) and the second edge (44a) are located at the same position in a direction that at least either of the first face (94) and the second face (104) faces,
**characterized in that**
the first member (21) includes a frame (21) fixed to the stator (11) to surround the stator (11) and the rotor (12), and
the second member (24) includes a cover (35) that closes the first hole (91), and a terminal (36) electrically connected to the stator (11) through the cover (35).

## Patentansprüche

1. Drehende elektrische Maschinen (10), die folgendes aufweist:
einen Stator (11);
einen Rotor (12), der so konfiguriert ist, dass er innerhalb des Stators (11) dreht;
eine Welle (13), die so konfiguriert ist, dass sie zusammen mit dem Rotor (12) dreht; und
ein Gehäuse (14) mit einem Raum (30), das den Stator (11) und den Rotor (12) unterbringt, wobei das Gehäuse ein erstes Glied (22; 23), ein zweites Glied (23; 22), und eine Schraube (26), die das erste Glied (22; 23) und das zweite Glied (23; 22) miteinander verbindet, umfasst, wobei das erste Glied (22; 23) folgendes umfasst:
ein erstes Loch (31), das durch das erste Glied (22; 23) in einer ersten Richtung (Dxo) hindurchführt, wobei das erste Loch dem Raum (30) ermöglicht mit einer Außenseite des Gehäuses (14) in Verbindung zu stehen;
eine innere Umfangsfläche (72), die in das Innere des ersten Lochs (31) gerichtet ist;
eine erste Verbindungsfläche (73), die mit einem Ende der inneren Umfangsfläche (72) in der ersten Richtung (Dxo) verbunden ist, die in eine Richtung gerichtet ist, die die Richtung, in die die innere Umfangsfläche (72) gerichtet ist, kreuzt, und mit einem zweiten Loch (75), in das die Schraube (26) eingefügt ist, versehen ist; und
eine erste Fläche (74), die mit einem Ende der inneren Umfangsfläche (72) in einer zweiten Richtung (Dxi) verbunden ist, die entgegengesetzt zu der ersten Richtung (Dxo) ist, und in eine Richtung gerichtet ist, die die Richtung, in die die innere Umfangsfläche (72) gerichtet ist, kreuzt,
das zweite Glied (23; 22) in das erste Loch (31) eingeführt ist, und folgendes umfasst:
eine äußere Umfangsfläche (83), die der inneren Umfangsfläche (72) gegenüberliegt,
eine zweite Verbindungsfläche (84), die mit einem Ende der äußeren Umfangsfläche (83) in der ersten Richtung (Dxo), die der ersten Verbindungsfläche (73) gegenüberliegt, verbunden ist, und mit einem dritten Loch (85), in das die Schraube (26) eingeführt ist, versehen ist; und
eine zweite Fläche (86), die mit einem Ende der äußeren Umfangsfläche (83) in der zweiten Richtung (DX7) verbunden ist, und der ersten Fläche (74) gegenüberliegt,
das Gehäuse (14) eine innere Fläche (40) hat, die den Raum (30) definiert, und
mindestens eine der ersten Fläche (74) und der zweiten Fläche (86) mit der inneren Fläche (40) verbunden ist, und eine Axialrichtung der Welle (13) kreuzt,
die innere Fläche (40) eine erste innere Fläche (41), die in dem ersten Glied (22; 23) enthalten ist, und eine zweite innere Fläche (42), die in dem zweiten Glied (23; 22) enthalten ist, hat,
die erste Fläche (74) mit einer ersten Kante (42b) der ersten inneren Fläche (41) verbunden ist,
die zweite Fläche (86) mit einer zweiten Kante (43a) der zweiten inneren Fläche (42) verbunden ist, und
die erste Kante (42b) und die zweite Kante (43a) sich an der gleichen Stelle in einer Richtung, in die mindestens eine der ersten Fläche (74) und der zweiten Fläche (86) gerichtet ist, befinden,
**dadurch gekennzeichnet, dass** die drehende elektrische Maschine (10) ferner folgendes aufweist:
ein Lager (15), das drehbar die Welle (13) stützt, wobei
das Gehäuse (14) einen Rahmen (21) umfasst, der an dem Stator (11) befestigt ist, um den Stator (11) und den Rotor (12) zu umgeben;
eine Halterung (22), die ein Ende des Rahmens (21) in einer Axialrichtung der Welle (13) schließt; und
eine Wand (23), die an der Halterung (22) angebracht ist,
das Lager (15) sich zwischen der Wand (23) und der Halterung (22) befindet,
eines des ersten Glieds (22; 23) und des zweiten Glieds (23; 22)
die Halterung (22) umfasst, und
das andere des ersten Glieds (22; 23) und des zweiten Glieds (23; 22) die Wand (23) umfasst.

2. Drehende elektrische Maschine (10), die folgendes aufweist:
einen Stator (11);
einen Rotor (12), der so konfiguriert ist, dass er innerhalb des Stators (11) dreht;
eine Welle (13), die so konfiguriert ist, dass sie zusammen mit dem Rotor (12) dreht; und
ein Gehäuse (14) mit einem Raum (30), der den Stator (11) und den Rotor (12) unterbringt, wobei das Gehäuse ein erstes Glied (21), ein zweites Glied (24), und eine Schraube (27), die das erste Glied (21) und das zweite Glied (24) miteinander verbindet, umfasst, wobei das erste Glied (21) folgendes umfasst:
ein erstes Loch (91), das durch das erste Glied (21) in einer ersten Richtung (Dro) hindurchführt, wobei das erste Loch dem Raum (30) ermöglicht mit einer Außenseite des Gehäuses (14) in Verbindung zu stehen;
eine innere Umfangsfläche (92), die in das Innere des ersten Lochs (91) gerichtet ist;
eine erste Verbindungsfläche (93), die mit einem Ende der inneren Umfangsfläche (92) in der ersten Richtung (Dro) verbunden ist, die in eine Richtung gerichtet ist, die die Richtung, in die die Umfangsfläche (92) gerichtet ist, kreuzt, und mit einem zweiten Loch (96), in das die Schraube (27) eingeführt ist, versehen ist; und
eine erste Fläche (94), die mit einem Ende der inneren Umfangsfläche (92) in einer zweiten Richtung (Dri), die der ersten Richtung (Dro) entgegengesetzt ist, verbunden ist, und in eine Richtung gerichtet ist, die die Richtung, in die die innere Umfangsfläche (92) gerichtet ist, kreuzt,
das zweite Glied (24) in das erste Loch (91) eingeführt ist, und folgendes umfasst:
eine äußere Umfangsfläche (103), die der inneren Umfangsfläche (92) gegenüberliegt,
eine zweite Verbindungsfläche (106), die mit einem Ende der äußeren Umfangsfläche (103) in der ersten Richtung (Dro), die der ersten Verbindungsfläche (93) gegenüberliegt, verbunden ist, und mit einem dritten Loch (107), in das die Schraube (27) eingeführt ist, versehen ist; und
eine zweite Fläche (104), die mit einem Ende der äußeren Umfangsfläche (103) in der zweiten Richtung (Dri) verbunden ist, und der ersten Fläche (94) gegenüberliegt,
das Gehäuse (14) eine innere Fläche (40) hat, die den Raum (30) definiert, und
mindestens eine der ersten Fläche (94) und der zweiten Fläche (104) mit der inneren Fläche (40) verbunden ist, und eine Axialrichtung der Welle (13) kreuzt,
die innere Fläche (40) eine erste innere Fläche (41), die in dem ersten Glied (21) enthalten ist, und eine zweite innere Fläche (42), die in dem zweiten Glied (24) enthalten ist, hat,
die erste Fläche (94) mit einer ersten Kante (41b) der ersten inneren Fläche (41) verbunden ist,
die zweite Fläche (104) mit einer zweiten Kante (44a) der zweiten inneren Fläche (42) verbunden ist, und
die erste Kante (41b) und die zweite Kante (44a) sich an der gleichen Stelle in einer Richtung, in die mindestens eine der ersten Fläche (94) und der zweiten Fläche (104) gerichtet ist, befinden,
**dadurch gekennzeichnet, dass**
das erste Glied (21) einen Rahmen (21), der an dem Stator (11) befestigt ist, um den Stator (11) und den Rotor (12) zu umgeben, umfasst, und
das zweite Glied (24) eine Abdeckung (35), die das erste Loch (91) schließt, und einen Anschluss (36), der elektrisch mit dem Stator (11) durch die Abdeckung (35) verbunden ist, umfasst.

## Revendications

1. Machine électrique rotative (10), comprenant :
un stator (11) ;
un rotor (12) configuré pour entrer en rotation à l'intérieur du stator (11) ;
un arbre (13) configuré pour entrer en rotation conjointement avec le rotor (12) ; et
un logement (14) avec un espace (30) qui loge le stator (11) et le rotor (12), le logement incluant un premier élément (22 ; 23), un second élément (23 ; 22), et un boulon (26) qui assemble le premier élément (22 ; 23) et le second élément (23 ; 22), l'un avec l'autre, dans laquelle le premier élément (22 ; 23) inclut :
un premier trou (31) passant à travers le premier élément (22 ; 23) dans une première direction (Dxo), le premier trou permettant à l'espace (30) de communiquer avec un extérieur du logement (14) ;
une face circonférentielle interne (72) qui est tournée vers l'intérieur du premier trou (31) ;
une première face d'assemblage (73) raccordée à une extrémité de la face circonférentielle interne (72) dans la première direction (Dxo), tournée dans une direction croisant la direction dans laquelle est tournée la face circonférentielle interne (72), et pourvue d'un deuxième trou (75) dans lequel est ajusté le boulon (26) ; et
une première face (74) raccordée à une extrémité de la face circonférentielle interne (72) dans une seconde direction (Dxi) opposée à la première direction (Dxo) et tournée dans une direction croisant la direction dans laquelle est tournée la face circonférentielle interne (72),
le second élément (23 ; 22) est ajusté dans le premier trou (31), et inclut :
une face circonférentielle externe (83) opposée à la
face circonférentielle interne (72),
une seconde face d'assemblage (84) raccordée à une extrémité de la face circonférentielle externe (83) dans la première direction (Dxo), opposée à la première face d'assemblage (73), et
pourvue d'un troisième trou (85) dans lequel est ajusté le boulon (26) ; et
une seconde face (86) raccordée à une extrémité de la face circonférentielle externe (83) dans la seconde direction (Dxi), et opposée à la première face (74),
le logement (14) a une face interne (40) qui définit l'espace (30), et
au moins l'une ou l'autre de la première face (74) et de la seconde face (86) est raccordée à la face interne (40), et croise une direction axiale de l'arbre (13),
la face interne (40) a une première face interne (41) incluse dans le premier élément (22 ; 23), et
une seconde face interne (42) incluse dans le second élément (23 ; 22),
la première face (74) est raccordée à un premier bord (42b) de la première face interne (41),
la seconde face (86) est raccordée à un second bord (43a) de la seconde face interne (42), et
le premier bord (42b) et le second bord (43a) sont situés à la même position dans une direction dans laquelle est tournée au moins l'une ou l'autre de la première face (74) et de la seconde face (86),
**caractérisée en ce que** la machine électrique rotative (10) comprend en outre :
un palier (15) qui supporte de façon rotative l'arbre (13), dans laquelle
le logement (14) inclut un cadre (21) fixé au stator (11) pour entourer le stator (11) et le rotor (12) ; un support (22) qui ferme une extrémité du cadre (21) dans une direction axiale de l'arbre (13) ; et une paroi (23) jointe au support (22),
le palier (15) est situé entre la paroi (23) et le support (22),
un du premier élément (22 ; 23) et du second élément (23 ; 22) inclut le support (22), et
l'autre du premier élément (22 ; 23) et du second élément (23 ; 22) inclut la paroi (23).

2. Machine électrique rotative (10), comprenant :
un stator (11) ;
un rotor (12) configuré pour entrer en rotation à l'intérieur du stator (11) ;
un arbre (13) configuré pour entrer en rotation conjointement avec le rotor (12) ; et
un logement (14) avec un espace (30) qui loge le stator (11) et le rotor (12), le logement incluant un premier élément (21), un second élément (24), et un boulon (27) qui assemble le premier élément (21) et le second élément (24) l'un avec l'autre, dans laquelle le premier élément (21) inclut :
un premier trou (91) passant à travers le premier élément (21) dans une première direction (Dro),
le premier trou permettant à l'espace (30) de communiquer avec un extérieur du logement (14) ;
une face circonférentielle interne (92) qui est tournée vers l'intérieur du premier trou (91) ;
une première face d'assemblage (93) raccordée à une extrémité de la face circonférentielle interne (92) dans la première direction (Dro), tournée dans une direction croisant la direction dans laquelle est tournée la face circonférentielle interne (92), et pourvue d'un deuxième trou (96) dans lequel est ajusté le boulon (27) ; et
une première face (94) raccordée à une extrémité de la face circonférentielle interne (92) dans une seconde direction (Dri) opposée à la première direction (Dro), et tournée dans une direction croisant la direction dans laquelle est tournée la face circonférentielle interne (92),
le second élément (24) est ajusté dans le premier trou (91), et inclut :
une face circonférentielle externe (103) opposée à la face circonférentielle interne (92),
une seconde face d'assemblage (106) raccordée à une extrémité de la face circonférentielle externe (103) dans la première direction (Dro), opposée à la première face d'assemblage (93), et pourvue d'un troisième trou (107) dans lequel est ajusté le boulon (27) ; et
une seconde face (104) raccordée à une extrémité de la face circonférentielle externe (103) dans la seconde direction (Dri), et opposée à la première face (94),
le logement (14) a une face interne (40) qui définit l'espace (30), et
au moins l'une ou l'autre de la première face (94) et de la seconde face (104) est raccordée à la face interne (40), et croise une direction axiale de l'arbre (13),
la face interne (40) a une première face interne (41) incluse dans le premier élément (21), et une seconde face interne (42) incluse dans le second élément (24),
la première face (94) est raccordée à un premier bord (41b) de la première face interne (41),
la seconde face (104) est raccordée à un second bord (44a) de la seconde face interne (42), et
le premier bord (41b) et le second bord (44a) sont situés à la même position dans une direction dans laquelle est tournée au moins l'une ou l'autre de la première face (94) et de la seconde face (104),
**caractérisée en ce que**
le premier élément (21) inclut un cadre (21) fixé au stator (11) pour entourer le stator (11) et le rotor (12), et
le second élément (24) inclut un couvercle (35) qui ferme le premier trou (91), et une borne (36) raccordée électriquement au stator (11) à travers le couvercle (35).
